# EUROPÄISCHE PATENTANMELDUNG

(11) **EP 3 954 894 A1**
(43) Veröffentlichungstag der Anmeldung: **16.02.2022**
(21) Anmeldenummer: 20191119.5
(22) Anmeldetag: 14.08.2020
(51) Int. Cl.: F03D 7/02, F03D 15/00, F03D 80/80, F16H 1/46, H02K 7/102, H02K 7/116, H02K 7/18

(54) **MASCHINENEINHEIT FÜR EINE WINDKRAFTANLAGE UND EIN VERFAHREN ZU DEREN BETRIEB**

(71) Anmelder: Siemens Aktiengesellschaft, 80333 München (DE); Flender GmbH, 46395 Bocholt (DE)
(72) Erfinder: Dinter, Ralf Martin, 45888 Gelsenkirchen (DE); Winkler, Günther, 4785 Haibach (AT)
(74) Vertreter: Michalski Hüttermann & Partner Patentanwälte mbB

(57) **Zusammenfassung**

Die Erfindung betrifft eine Maschineneinheit (1) für eine Windkraftanlage (6), ein zugehöriges Verfahren zum Betrieb und ein zugehöriges Computerprogrammprodukt. Die Maschineneinheit (1) für eine Windkraftanlage (6), weist einen Generator (2) und ein Getriebe (3) auf, wobei der Generator (2) einen Rotor (4) und einen Stator (5) aufweist, wobei der Generator (2) einen Innenbereich (7) aufweist, wobei das Getriebe (3) zumindest teilweise in dem Innenbereich (7) positioniert ist, wobei das Getriebe (3) ein Planetengetriebe ist.

## Beschreibung

Die Erfindung betrifft eine Maschineneinheit für eine Windkraftanlage. Ebenso betrifft die Erfindung ein Verfahren zum Betrieb einer Maschineneinheit für eine Windkraftanlage.

Eine Maschineneinheit für eine Windkraftanlage befindet sich in einer Gondel. Die Maschineneinheit weist beispielsweise einen Generator und ein Getriebe auf. Der Platz in einer Gondel ist begrenzt. Eine kompakte Bauweise lässt sich beispielsweise durch einen HybridDrive erzielen, indem das Getriebe direkt an den Generator angeflanscht ist, Getriebe und Generator also direkt nebeneinander sind.

Eine Aufgabe der Erfindung ist es eine Maschineneinheit anzugeben, welche einen geringen Platzbedarf hat. Ferner ist eine Aufgabe der Erfindung, ein Verfahren anzugeben, welches einen kompakten Betrieb einer Maschineneinheit ermöglicht.

Ferner ist es eine Aufgabe der Erfindung, ein hierfür entsprechendes Computerprogrammprodukt anzugeben.

Eine Lösung der Aufgabe gelingt bei einer Maschineneinheit 1, bei einem Verfahren zum Betrieb einer Maschineneinheit für eine Windkraftanlage nach Anspruch 12 und Bahnen Computerprogrammprodukt nach Anspruch 15.

Eine Maschineneinheit ist insbesondere für eine Windkraftanlage vorgesehen. Die Maschineneinheit kann auch bei anderen Anwendungen eingesetzt werden. Die Maschineneinheit weist einen Generator und ein Getriebe auf, wobei der Generator einen Rotor und einen Stator aufweist. Der Generator kann beispielsweise ein Außenläufer oder ein Innenläufer sein. Der Generator weist einen Innenbereich auf, wobei das Getriebe zumindest teilweise in dem Innenbereich positioniert ist. Das Getriebe ist insbesondere ein Planetengetriebe. Hierdurch ist eine kompakte und integrierte Bauweise eines Antriebsstrangs einer Windkraftanlage erzielbar. Die Maschineneinheit kann insbesondere auch modular aufgebaut sein, wobei ein Modul der Generator ist, ein weiteres Modul das Getriebe und gegebenenfalls ein drittes Modul eine Kupplung ist.

Der Innenbereich des Generators weist einen Bauraum für eine technische Einrichtung, wie ein Getriebe auf. Der Bauraum, also der nutzbare Innenbereich, ist beispielsweise bei einem Außenläufer durch den Stator bestimmt. Der Bauraum, also der nutzbare Innenbereich, ist beispielsweise bei einem Innenläufer durch den Läufer (auch Rotor genannt) bestimmt.

Ist der Generator ein Außenläufer und weist der Generator beispielsweise einen Ölraum am Stator auf, so kann der Bauraum auch durch die Ausgestaltung des Ölraumes vorgegeben sein. Das Öl im Ölraum ist insbesondere zur Kühlung des Stators vorgesehen. Der Bauraum im Innenbereich des Generators hat insbesondere eine zylinderförmige Gestalt. Der Innenbereich des Generators kann auch durch das Generatorgehäuse bestimmt sein. So ist Bauraum für z.B. das Getriebe und/oder die Bremse innerhalb des Generatorgehäuses dem Innenbereich zuzurechnen.

In einer Ausgestaltung der Maschineneinheit ist der Generator ein Synchrongenerator. Der Synchrongenerator ist insbesondere ein permanenterregter Synchrongenerator. Synchrongeneratoren können fremderregt bzw. eigenerregt sein. Der permanenterregte Synchrongenerator ist eigenerregt. Dies erhöht die Ausfallsicherheit. Auch kann eine kompakte Bauweise realisiert werden. Bei dem permanenterregten Synchrongenerator kann beispielsweise der Rotor mit den Magneten nach außen verbaut sein und der Stator mit der Spule (eigener Raum für die Kühlung) nach innen gesetzt sein. Dies ist demnach ein Außenläufer. In den verbleibenden Bauraum (im "Bauch das Getriebe") des Generators ist ein Teil des Getriebes oder das gesamte Getriebe integriert.

In einer Ausgestaltung der Maschineneinheit weist der Generator also einen Ölraum auf. Durch das Öl kann eine effiziente Kühlung erzielt werden, wodurch eine kompakte Bauweise der Maschineneinheit möglich ist.

In einer Ausgestaltung der Maschineneinheit weist die Maschineneinheit eine Bremse auf. Die Bremse ist bezüglich der zu übertragenden Kräfte zwischen dem Generator und dem Getriebe angeordnet.

In einer Ausgestaltung der Maschineneinheit ist die Bremse in dem Innenbereich positioniert. Die Bremse ist also insbesondere vom Generator zumindest teilweise umgeben. So befindet sich, beispielsweise von der Bremse aus gesehen, in einer radialen Richtung nach außen der Läufer und/oder der Stator und/oder der Ölraum des Generators. Die radiale Richtung ergibt sich durch einen rotatorischen Aufbau der Bremse. Durch die Integration der Bremse in die Maschineneinheit ergibt sich eine kompakte Bauweise.

In einer Ausgestaltung der Maschineneinheit ist die Bremse auf einer Abtriebsseite des Getriebes positioniert. Bei einer Windkraftanlage mit einem Getriebe wirkt die von den Blättern der Windkraftanlage erzeugte Kraft zunächst auf eine Antriebsseite des Getriebes, wird dann durch das Getriebe geführt und an der Abtriebsseite ausgegeben. Hierzu kann es eine Antriebswelle auf der Antriebsseite geben und eine Abtriebswelle auf der Abtriebsseite.

In einer Ausgestaltung der Maschineneinheit ist die Antriebsseite des Getriebes außerhalb des Innenbereichs. So kann, wenn für das Getriebe noch mehr Platz gebraucht wird als im Innenbereich zur Verfügung steht, das Getriebe größer gebaut werden. Das Getriebe ragt so auf der Abtriebsseite nicht über eine axiale Erstreckung des Generators hinaus. Auf der Antriebsseite kann das Getriebe in einer Ausgestaltung über die axiale Erstreckung des Generators hinausragen.

In einer Ausgestaltung der Maschineneinheit weist das Getriebe Getriebestufen auf. Durch die Verwendung von Getriebestufen kann das Getriebe kompakter gebaut werden. Insbesondere ist es möglich, das Getriebe derart auszuführen, dass dieses über seine axiale Erstreckung unterschiedliche Durchmesser aufweisen kann. So kann ein Teil des Getriebes räumlich in den Generator integriert werden.

In einer Ausgestaltung der Maschineneinheit ist das Getriebe als Planetengetriebe mit einer Stufe, mit zwei Stufen oder mit drei Stufen ausgeführt. Der Antrieb erfolgt über den Planetenträger, das Hohlrad ist ortsfest und der Abtrieb erfolgt über die Sonne (auch Sonnenrad genannt). Es sind auch andere Ausführungen von Planetengetrieben möglich bzw. ein Antrieb über das Hohlrad bei feststehendem Planetenträger, ein Koppelgetriebe oder ein Differentialgetriebe. Je nach Auslegung des/der Planetengetriebe und des Generators können 1-2 Planetenstufen in den Generator integriert werden. Des Weiteren wird beispielsweise die Bremsscheibe in den Generator integriert. Die Montage und Wartung erfolgt in einer Ausgestaltung beispielsweise durch eine oder mehrere Öffnungen in der Rotorwand. Der Generator ist insbesondere durch eine Haube zum Berührschutz gesichert (der magnetische Fluss geht nach innen). Die Lagerung des Rotors und die Wellen-Naben Verbindung der Sonnenwelle können auf unterschiedliche Art erfolgen. Beispielsweise kann eine Rotorwellenanordnung eine Ausgangswelle einer Getriebeeinheit und eine Rotorwelle einer Generatoreinheit umfassen. Die Getriebeeinheit und die Generatoreinheit sind im montierten Zustand mit einer Bogenzahnkupplung drehmomentübertragend miteinander verbunden. Dazu ist die Bogenzahnkupplung mit der Ausgangswelle und der Rotorwelle verbunden. Dabei kann die Ausgangswelle mittels der Bogenzahnkupplung teilweise in der Rotorwelle aufgenommen sein oder die Rotorwelle mittels der Bogenzahnkupplung teilweise in der Ausgangswelle aufgenommen sein. Die Bogenzahnkupplung umfasst beispielsweise auch zumindest ein Stützelement. Das zumindest eine Stützelement ist zu einem axialen Positionieren der Bogenzahnkupplung ausgebildet und ist lösbar befestigt. Das zumindest eine Stützelement ist zum Begrenzen einer relativen axialen Beweglichkeit der Bogenzahnkupplung, und damit der Rotorwelle bezüglich der Ausgangswelle, ausgebildet. Das zumindest eine Stützelement ist insbesondere auch zur Aufnahme von Axialkräften ausgebildet. Dementsprechend wird im Betrieb ein axiales Wandern der Rotorwelle auf der Ausgangswelle vermieden. Dementsprechend kann die Bogenzahnkupplung entlang einer Axialrichtung, also im Wesentlichen entlang einer Hauptdrehachse der Getriebeeinheit und/oder Generatoreinheit, kompakt ausgebildet werden. Ebenso ist die Rotorwelle damit in einer fliegenden Lagerung aufnehmbar. Das axiale Positionieren der Bogenzahnkupplung gewährleistet eine leichtgängige Beweglichkeit und ermöglicht ein einstellbewegliches, insbesondere winkeleinstellbewegliches, Verhalten zwischen der Ausgangswelle und der Rotorwelle. Das zumindest eine Stützelement ist separat in einfacher Weise herstellbar und erlaubt eine schnelle Montage und Demontage eines Generatorgetriebes mit einer Getriebeeinheit und Generatoreinheit.

In einer Ausgestaltung der Maschineneinheit ist eine erste Getriebestufe im Innenbereich positioniert und eine weitere Getriebestufe an einer Stirnseite des Generators. So kann der Bauraum gut ausgenutzt werden und eine kompakte Maschineneinheit ermöglicht werden.

In einer Ausgestaltung der Maschineneinheit weisen die Getriebestufen unterschiedliche Durchmesser auf. In einer Ausgestaltung der Maschineneinheit ist eine erste Getriebestufe im Innenbereich, also vom Generator umgeben, und eine weitere Getriebestufe, welche einen größeren Durchmesser hat als die erste Getriebestufe, in einem Außenbereich, also beispielsweise an einer Stirnseite des Generators positioniert.

In einer Ausgestaltung der Maschineneinheit weist diese zumindest drei Getriebestufen auf. Die zwei Getriebestufen zwischen einer Eingangsgetriebestufe und dem Generator können gleiche Durchmesser aufweisen. Derart ist es möglich beide in den Generator zu verbauen, wobei weitere Getriebestufen außerhalb des Generators sind.

In einer Ausgestaltung der Maschineneinheit weist diese zwei Planetenstufen auf, insbesondere eine erste Planetenstufe und eine zweite Planetenstufe, wobei diese beiden Planetenstufen den gleichen Außendurchmesser aufweisen und beide im Generator verbaut sind.

In einer Ausgestaltung der Maschineneinheit ist als Antrieb des Getriebes ein Planetenträger und als Abtrieb des Getriebes ein Sonnenrad vorgesehen. Dies ist für eine kompakte Bauweise förderlich.

Bei einem Verfahren zum Betrieb einer Maschineneinheit für eine Windkraftanlage wird eine Antriebskraft über ein Getriebe und insbesondere eine Bremse durch den Generator zu einem Rotor des Generators geführt. Der Kraftfluss von den Rotorblättern der Windkraftanlage geht also über das Getriebe durch den Generator hindurch und dann erst auf den Rotor des Generators. Dies ermöglicht insbesondere eine kompakte Bauform im Bereich zwischen den Rotorblättern und dem Generator.

In einer Ausgestaltung des Verfahrens wird eine Maschineneinrichtung der obig beschriebenen Art oder der im Folgenden beschriebenen Art verwendet.

In einer Ausgestaltung des Verfahrens betrifft das Verfahren den simulierten Betrieb. Es wird also der Betrieb der Windkraftanlage bzw. der Maschineneinrichtung zumindest teilweise simuliert. Dadurch kann beispielsweise die Auslegung der Windkraftanlage bzw. der Maschineneinrichtung verbessert werden. Die Windkraftanlage weist einen Antriebsstrang auf. Der Antriebsstrang weist insbesondere ein Getriebe und einen Generator auf. Die Simulation des dynamischen Verhaltens des Antriebsstrangs kann mit Daten aus dem Antriebsstrang erfolgen. So kann hierfür beispielsweise ein Drehmoment, eine Drehzahl und/oder die entsprechende zeitliche Veränderung an der Rotorwelle gemessen werden. Diese Größen können als Eingangsgrößen für die Simulation verwendet werden. Noch präziser kann ein Simulationsmodell beispielsweise dann gestaltet werden, wenn weitere Informationen vom Generator zusätzlich verwendet werden. Dies betrifft insbesondere Größen, wie eine elektrische Spannung oder einen elektrischen Strom des Generators. In einer weiteren Ausgestaltung können zur Simulation weitere Daten einer Windkraftanlage verwendet werden. Dies sind z.B. Windstärke, Windrichtung, Alter der Windkraftanlage, Zustand eines oder mehrerer Lager und/oder etc. Durch die Simulation ist auch die Ausbildung eines digitalen Zwillings möglich. So kann beispielsweise parallel zum Betrieb der Windkraftanlage bzw. der Maschineneinrichtung eine Überwachung erfolgen, um beispielsweise frühzeitig Verschleiß oder einen sich anbahnenden Fehler zu erkennen.

Es ist ein Computerprogrammprodukt vorsehbar, das computerausführbare Programmmittel aufweist und bei Ausführung auf einer Rechnereinrichtung mit Prozessormitteln und Datenspeichermitteln geeignet ist, ein Verfahren nach einer der beschriebenen Art durchzuführen. So kann eine zugrundeliegende Aufgabenstellung durch ein Computerprogrammprodukt gelöst werden, das zu einem Simulieren eines Betriebsverhaltens der Windkraftanlage bzw. der Maschineneinrichtung ausgebildet ist. Dazu kann das Computerprogrammprodukt Daten des Getriebes und/oder der Bremse und/oder des Generators umfassen. Das Computerprogrammprodukt kann auch eine Datenschnittstelle aufweisen, über die Betriebsparameter, wie beispielsweise eine Drehzahl, ein Motorstrom und/oder eine Bremskraft, vorgebbar sind. Ebenso kann das Computerprogrammprodukt auch eine Datenschnittstelle zum Ausgeben von Simulationsergebnissen aufweisen. Die Windkraftanlage bzw. die Maschineneinrichtung, deren Betriebsverhalten mittels des Computerprogrammprodukts simulierbar ist, ist insbesondere gemäß mindestens einer der skizzierten Ausführungsformen ausgebildet. Das Computerprogrammprodukt kann dazu beispielsweise als sogenannter Digitaler Zwilling ausgebildet sein.

Die Merkmale der einzelnen beanspruchten bzw. beschriebenen Gegenstände sind ohne Weiteres miteinander kombinierbar. Die Erfindung wird im Folgenden anhand einzelner Ausführungsformen in Figuren beispielhaft näher erläutert. Dabei zeigt:
- FIG 1: eine Windkraftanlage;
- FIG 2: eine Maschineneinrichtung und
- FIG 3: eine weiter Maschineneinrichtung.

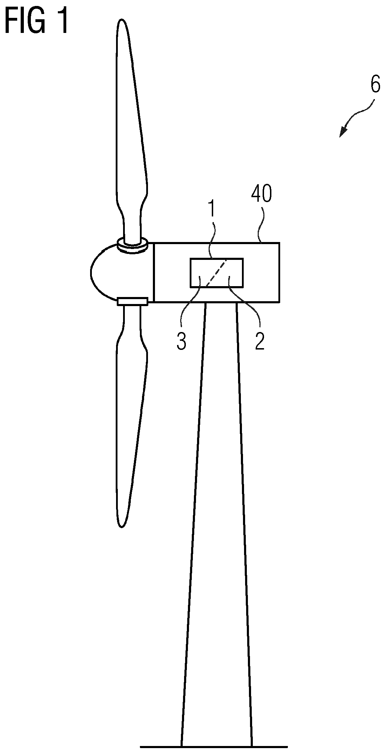

Die Darstellung nach Figur 1 zeigt skizzenhaft eine Windkraftanlage 6. Die Windkraftanlage 6 weist eine Gondel 40 und Rotorblätter 41 auf. In der Gondel 40 befindet sich eine Maschineneinheit 1. Diese Maschineneinheit 1 weist einen Generator 2 und ein Getriebe 3 auf. Der Generator 2 und das Getriebe 3 sind integriert aufgebaut.

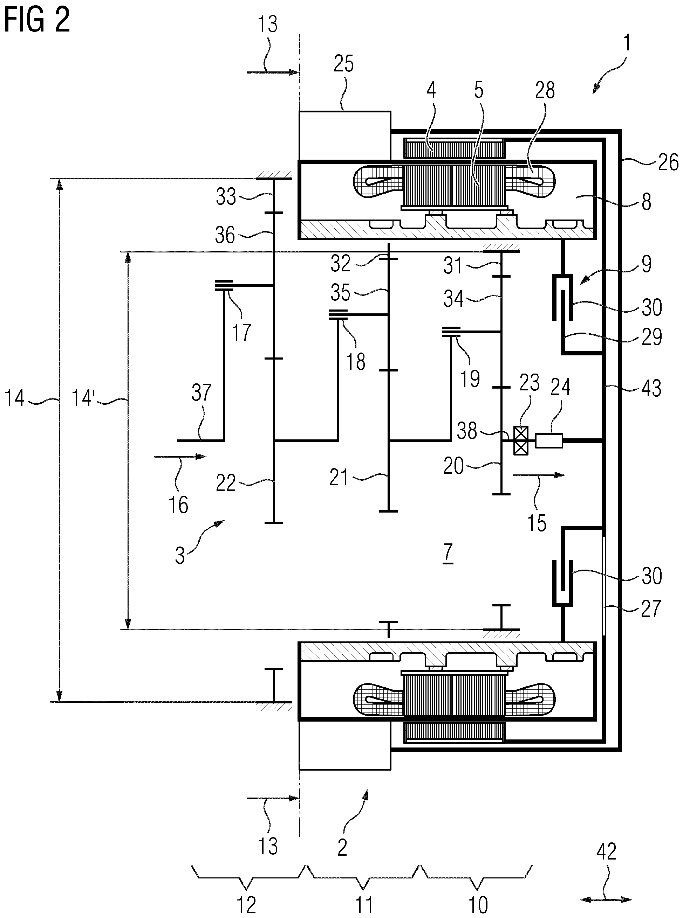

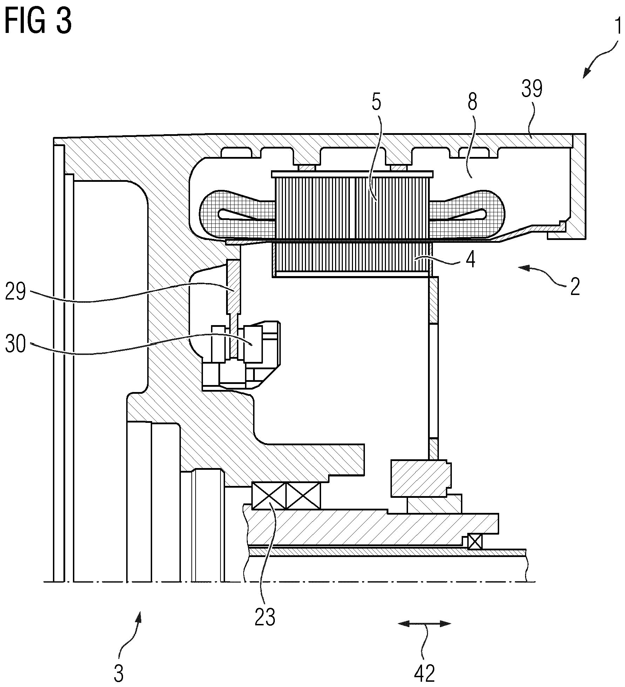

Die Darstellung nach Figur 2 zeigt skizzenhaft eine Maschineneinheit 1, welche einen Generator 2 und ein Getriebe 3 aufweist. Das Getriebe 3 ist ein Planetengetriebe. Der Generator 2 weist einen Rotor 4 und einen Stator 5 auf. Der Stator 5 weist Wickelköpfe 28 auf. Der Generator 2 ist ein Außenläufer. Der Stator 5 ist, beispielsweise mittels Öl, gekühlt. Hierfür ist ein Ölraum 8 vorgesehen. Der Generator 2 bildet einen Innenraum 7 aus. Der Innenraum 7 ist in seiner axialen Länge 42 durch den Generator 2 bestimmt. Die axiale Länge 42 des Innenraums 7 ist insbesondere kleiner bzw. gleich der axialen Länge 42 des Rotors 4 und/oder des Stators 5 und/oder des Ölraums 8 und/oder eines Gehäuses 39 der Maschineneinheit 1 (siehe Fig 3). Der Rotor 3 ist über ein Verbindungselement 43 mit einer Bremse 9 verbunden. Die Bremse 9 weist eine Bremsscheibe 29 und einen Bremssattel 30 auf. Das Verbindungselement 43 weist eine Öffnung 27 auf. Das Verbindungselement 43 bildet z.B. eine Art Wand, in welcher sich die Öffnung 27 befindet, wobei die Öffnung 27 insbesondere dem Service der Bremse dient. Durch die Öffnungen 27 kann die Bremse 9 also beispielsweise gewartet werden. Dem Verbindungselement 43 benachbart ist ein Schutzgitter 26. Das Verbindungselement 43 ist über eine Kupplung 24 mit einer Ausgangswelle 38 des Getriebes 3 verbunden. Die Ausgangswelle 38 ist mittels eines Lagers 23 gelagert. Das Getriebe 3 weist drei Getriebestufe 10, 11 und 12 auf. Eine erste Getriebestufe 10 und zweite Getriebestufe 11 befinden sich im Innenbereich 7. Eine dritte Getriebestufe 12 befindet sich in einem Außenbereich an einer Stirnseite 13 des Generators 2. Der Generator 2 weist im Übrigen auch einen elektrischen Anschlusskasten 25 auf. Die erste Getriebestufe 10 weist ein Sonnenrad 20, ein Planetenrad 34 und ein Hohlrad 31 auf. Das Planetenrad 34 ist mittels eines Planetenträgers 19 getragen. Die zweite Getriebestufe 11 weist ein Sonnenrad 21, ein Planetenrad 35 und ein Hohlrad 32 auf. Das Planetenrad 35 ist mittels eines Planetenträgers 18 getragen. Die erste Getriebestufe 12 weist ein Sonnenrad 22, ein Planetenrad 36 und ein Hohlrad 33 auf. Das Planetenrad 34 ist mittels eines Planetenträgers 17 getragen. Über eine Antriebsseite 16 wird die Kraft über eine Eingangswelle 37 in die dritte Getriebestufe 12 geführt. An die dritte Getriebestufe 12 schließt die zweite Getriebestufe 11 an und an die zweite Getriebestufe 12 schließt die erste Getriebestufe 10 an, wobei die erste Getriebestufe 10 auf der Abtriebsseite 15 über die Ausgangswelle 38 die Kraft weitergibt. Die Getriebestufen 10,11,12 haben unterschiedliche Durchmesser 14, 14', wobei die Getriebestufe mit dem größten Durchmesser außerhalb des Generators 2 positioniert ist, sich also zumindest nicht vollständig im Innenbereich 7 befindet.

Die Darstellung nach Figur 3 zeigt skizziert in einem Ausschnitt auch eine Maschineneinheit 1 mit einem Generator 2, welcher einen Rotor 4 und einen Stator 5 aufweist, und einem Getriebe 3. Der Rotor 3 befindet sich in dem durch den Stator 5 gebildeten zylindrischen Raum. Der Generator ist also als ein Innenläufer ausgeführt. Der Generator 2 weist ein Gehäuse 39 auf, wobei mittels des Gehäuses 39 auch ein Ölraum 8 zumindest in Teilen ausführbar ist. Das Gehäuse 42 bildet eine axiale Länge bzw. Ausdehnung, in der auch das Getriebe 3 zumindest teilweise positioniert ist. Zwischen dem Rotor 4 und dem Getriebe befindet sich funktionell die Bremse mit der Bremsscheibe 29 und dem Bremssattel 30.

## Patentansprüche

1. Maschineneinheit (1) für eine Windkraftanlage (6), wobei die Maschineneinheit (1) einen Generator (2) und ein Getriebe (3) aufweist, wobei der Generator (2) einen Rotor (4) und einen Stator (5) aufweist, wobei der Generator (2) einen Innenbereich (7) aufweist, wobei das Getriebe (3) zumindest teilweise in dem Innenbereich (7) positioniert ist, wobei das Getriebe (3) ein Planetengetriebe ist.

2. Maschineneinheit (1) nach Anspruch 1, wobei der Generator (2) ein Synchrongenerator ist.

3. Maschineneinheit (1) nach Anspruch 1 oder 2, wobei der Generator (2) einen Ölraum (8) aufweist.

4. Maschineneinheit (1) nach einem der Ansprüche 1 bis 3, wobei die Maschineneinheit (1) eine Bremse (9) aufweist.

5. Maschineneinheit (1) nach Anspruch 4, wobei die Bremse (9) in dem Innenbereich (7) positioniert ist.

6. Maschineneinheit (1) nach Anspruch 4 oder 5, wobei die Bremse (9) auf einer Abtriebsseite (15) des Getriebes (3) ist.

7. Maschineneinheit (1) nach einem der Ansprüche 1 bis 6, wobei eine Antriebsseite (16) des Getriebes (3) außerhalb des Innenbereichs (7) ist.

8. Maschineneinheit (1) nach einem der Ansprüche 1 bis 7, wobei das Getriebe (3) Getriebestufen (10,11,12) aufweist.

9. Maschineneinheit (1) nach Anspruch 8, wobei eine erste Getriebestufe (10) im Innenbereich (7) positioniert ist und eine weitere Getriebestufe (12) an einer Stirnseite (13) des Generators (2).

10. Maschineneinheit (1) nach Anspruch 8 oder 9, wobei die Getriebestufen (10,11,12) unterschiedliche Durchmesser (14, 14') aufweisen und/oder wobei die beiden letzten Getriebestufen (10,11,12) gleiche Durchmesser aufweisen.

11. Maschineneinheit (1) nach einem der Ansprüche 1 bis 10, wobei als Antrieb des Getriebes (3) ein Planetenträger (17,18,19) vorgesehen ist und als Abtrieb des Getriebes (3) ein Sonnenrad (20,21,22) vorgesehen ist.

12. Verfahren zum Betrieb einer Maschineneinheit (1) für eine Windkraftanlage (23), wobei eine Antriebskraft (23) über ein Getriebe (3) und eine Bremse (9) durch den Generator (2) zu einem Rotor (4) des Generators (2) geführt wird.

13. Verfahren nach Anspruch 12, wobei eine Maschineneinheit (1) nach einem der Ansprüche 1 bis 11 verwendet wird.

14. Verfahren nach Anspruch 12 oder 13, wobei der Betrieb der Windkraftanlage (6) simuliert wird.

15. Computerprogrammprodukt, das computerausführbare Programmmittel aufweist und bei Ausführung auf einer Rechnereinrichtung mit Prozessormitteln und Datenspeichermitteln geeignet ist, ein Verfahren nach einem der Ansprüche 12 bis 14 durchzuführen.
